Europäisches Patentamt

European Patent Office

Office européen des brevets

(19)

(11) Publication number: **0 301 015 B1**

## EUROPEAN PATENT SPECIFICATION

(12)

(45) Date of publication of patent specification: **28.07.93**   (51) Int. Cl.⁵: **C08J  9/32**

(21) Application number: **87902319.0**

(22) Date of filing: **27.03.87**

(86) International application number:
**PCT/AU87/00086**

(87) International publication number:
**WO 87/06245 (22.10.87 87/23)**

(54) **LOW DENSITY PRESSURE RESISTANT RUBBER COMPOSITION.**

(30) Priority: **10.04.86 AU 5398/86**

(43) Date of publication of application:
**01.02.89 Bulletin  89/05**

(45) Publication of the grant of the patent:
**28.07.93 Bulletin  93/30**

(84) Designated Contracting States:
**DE FR GB IT**

(56) References cited:
| | |
|---|---|
| **EP-A- 0 156 488** | **WO-A-87/01070** |
| **FR-A- 1 349 510** | **GB-A- 1 195 568** |
| **GB-A- 1 541 203** | **GB-A- 2 167 017** |
| **US-A- 3 660 849** | **US-A- 3 856 721** |
| **US-A- 4 107 134** | **US-A- 4 351 913** |
| **US-A- 4 391 646** | |

**Patent Abstracts of Japan, C-321, page 10,
19 August 1985**

(73) Proprietor: **GULF RUBBER (AUST.) PTY. LIMIT-
ED
95 Baxter Road
Mascot, NSW 2020(AU)**

(72) Inventor: **MOLESWORTH, David, Ian
15 James Street
West Ryde, NSW 2114(AU)**

(74) Representative: **Crisp, David Norman et al
D. YOUNG & CO. 10 Staple Inn
London, WC1V 7RD (GB)**

EP 0 301 015 B1

## Description

The present invention relates to polymer compositions and more particularly, but not exclusively, to closed cell foamed rubber of use, for example, to fabricate wetsuits such as conventionally used by scuba divers as a means of thermal insulation.

Most commonly nowadays wetsuits are manufactured from closed cell foam rubber sheets which are made up by cutting, stitching and glueing.

Closed cell foamed rubber according to prior art includes a myriad of gaseous cells. These cells confer on the rubber good insulation properties and, by reducing its density, inherent buoyancy.

A further important property of this type of rubber is its ability to stretch substantially, enabling a diver clad in a suit constructed from the rubber to move freely.

Rubber suits of this kind are particularly suitable for use at or near the water surface, where the water pressure is not sufficient substantially to compress the gas cells. However, as the depth and thus water pressure at which the wetsuit is used increases, the gaseous cells tend to compress according to Boyle's Law. That is:

$$PV = C \text{ where}$$

P = Pressure, V = Volume, and C = Constant.

The problems associated with this reduction of cell size is two-fold. Firstly, it results in an overall reduction of the material thickness, thus reducing the insulating quality of the wetsuit, and secondly as the cells decrease in size so too does the buoyancy associated with the suit. These problems have the undesirable effect of increasing the risk of the diver suffering from hypothermia, and of increasing the diver's apparent mass as he descends. Assuming the diver is weighted, so as to be neutrally bouyant at the surface, then as he descends he becomes negatively buoyant, and so tends to sink.

In order to avoid that problem, various attempts have been made to include closed cell void material, for example hollow glass microspheres, into materials used to fabricate wetsuits. However, it has proved difficult to introduce the microspheres in a practical manner and at an acceptably low cost while retaining desired flexibility and an ability to utilize normal wetsuit fabrication techniques such as stitching and glueing. On the one hand, conventional mixing techniques used in rubber compounding impart high shear rates in order to achieve uniform dispersion of fillers while on the other hand buoyant materials such as hollow microspheres tend to be fragile and susceptible to fracture. Accordingly, microspheres have been incorporated by sifting into pre-formed interconnected cell foam rubber or by stirring into a rubber solution or thermoplastic melt.

U.S. 3,404,406 describes a composite material having an inner and outer skin of elastomeric sheet material and a core material adhesively bonded or riveted between the inner and outer skin. The core material may be cork, balsa, or a closed cell foamed plastic provided with incompressible cell walls. Alternatively, an interconnected-cell-foam rubber may be used as the core, the open cells of the foam rubber being rendered incompressible by sifting microballoons into the voids or compartments of the core material in sufficient number substantially to fill the core material voids.

The product is thus not of uniform composition and the resultant composite tends to be stiff and must contain a large number of individual core sections laminated with the outer skin in order to permit free movement of a diver's limbs when made into a wetsuit. That in turn results in heat loss at the perimeter of individual core sections. Composite materials as thus described are costly to manufacture and impractical to fabricate into wetsuits.

U.S. 3,660,849 describes a wetsuit having a layer of a thixotropic material such as a grease or a very low modulus elastomeric material filled with hollow glass microbubbles. The layer is enveloped by a sheet material.

The only low modulus elastomeric material exemplified in U.S 3,660,849 is an oil extended block copolymer of relatively low molecular weight. The block copolymer, being thermoplastic, forms a solution or gel with oil and can be melted at 300 to 400°F (148°C-204°C). Glass microspheres are stirred into the melt or solution which is then cast into sheets on a hand-crafted basis. The product has not found practical application. Elastomers of the kind which form solutions with oils into which microspheres can simply be stirred are necessarily low molecular weight thermoplastics which tend to "bleed" oil. That is undesirable in a wetsuit material and results in staining and loss of flexibility over extended periods. Due to density differences it is difficult to maintain a uniform dispersion of microspheres throughout the matrix. It is difficult to fabricate a complex shape such as a wetsuit from this material.

A further disadvantage of the product of U.S. 3,660,849 is that it places reliance upon thixotropy to prevent "creaming" of the bouyant microspheres which tend to rise to the surface during manufacture of the composite and even in the product.

We have now found it possible to provide:

an elastomeric composition which avoids or at least ameliorates the above discussed disadvantages of prior art;

an elastomeric material in which microfine buoyant particles are uniformly distributed, and which can be manufactured at an acceptable cost;

an elastomeric material containing microfine buoyant particles and which facilitates making up of wetsuits by use of conventional stitching and glueing techniques;

an elastomeric material containing microfine buoyant particles and which is capable of being moulded into complex shapes; and

a method for manufacture of an elastomeric material in which is incorporated substantially incompressible microfine buoyant particles.

According to one aspect the invention provides a method for manufacture of an elastomeric material comprising the steps of:-

(i) mixing ", e.g. by milling together," substantially incompressible buoyant smooth, hollow, glass microspheres, a plasticizer and a millable thermosetting elastomeric polymer composition having a Mooney Viscosity ML (1 + 4) 125°C in excess of 5 units, wherein the plasticizer is combined with the incompressible buoyant microspheres prior to said step of mixing,

(ii) curing the composition and (iii) stretching the cured composition to reduce the modulus of the cured composition, if any, between the buoyant microspheres and the cured composition.

The cured material is stretched, for example, so as to break cohesive bonds between the particles and the thermoset polymer.

Surprisingly, it has been found possible to distribute hollow glass microspheres uniformly through a millable thermosetting polymer matrix composition by means of high shear mixing equipment such as a roll mill or Zeta mixer, without fracture of a substantial proportion of the microspheres. By millable is meant a polymer having a mooney viscosity ML(1 + 4) 125ºC in excess of 5 units and more usually in excess of 20 units.

Millable thermosetting polymers of such viscosity require high shear forces for incorporation of ingredients. Incorporation of fragile hollow microspheres in such polymers was not previously contemplated.

Inclusion of microspheres in thermosetting polymers is accomplished by milling or mixing a selected thermosetting elastomer and microspheres together in the presence of a plasticizer. Use of a thermosetting polymer enables a uniform dispersion to be maintained in the cured end product.

Preferred embodiments of the present invention provide a buoyant elastomeric material of low thermal conductivity which may be made in sheet form and cut, sewn or glued to form a wetsuit or other product. Unlike conventional foam rubbers, embodiments according to the present invention may be subjected to conventional rubber processing techniques such as calendering, compression moulding, injection moulding, transfer moulding, extrusion and the like.

Thus complex shapes may be made by moulding which is more convenient and less expensive than cutting and stitching.

By way of example only, preferred embodiments of the invention will now be described with reference to various formulations.

Compositions according to the invention comprise a thermosetting elastomeric polymer composition and buoyant microfine particles.

The term "elastomeric polymer" as herein used includes both natural and synthetic polymers.

Examples of thermosetting elastomeric polymers which are suitable include styrene butadiene, polymers based on ethylene propylene including "EPM" & ("EPDM"), polynorbornene, chloroprene, silicone, fluoropolymers and mixtures thereof. Of these, EPDM and polynorbornene are highly preferred. Blends of thermosetting elastomeric polymers or combinations of thermosetting with thermoplastic polymers may also be used.

The preferred polymers for use in the invention when the end product is to be a wetsuit are EPDM polymers with a relatively high green strength and a relatively low elongation at break. EPDM has been found to be especially suitable because of its ability to absorb large quantities of filler and plasticizer while being resistant to deterioration by immersion in water or by exposure to U.V. radiation. It has been found that the higher molecular weight, higher viscosity EPDM polymers have the greatest propensity for incorporation of high levels of filler and oil while maintaining the physical properties of the cured rubber in a range acceptable for use in wetsuits.

Specifically a Mooney viscosity of ML (1 + 4) 125ºC 40 or greater is preferred. A green strength greater than 42 N/mm$^2$ in combination with elongation at break of less than 1400% has been found to provide a good result.

To date the best results have been obtained by selection of 3M brand hollow glass microspheres also known as "glass bubbles". These are available in a range of hydrostatic crush pressures. The 4000 psi (27,576 kPa) crush pressure grade has been found to offer the best balance of crush strength, cost and specific gravity. The smooth, spherical surface exhibited by glass bubbles is believed to be a major factor in maintaining flexibility with a high (greater than 20% by volume) loading of glass bubbles in the composition. Surprisingly, up to 500 parts by weight of glass microspheres by weight of the total composition have been able to be incorporated by the method herein described.

A plasticizer, for preference oil, is added to the glass microspheres prior to milling. Parraffinic oil is preferred as a plasticizer on the basis of cost but other oils or synthetic plasticizers well known in the art such as phthalates may be used. The plasticizer is believed to act as a lubricant for the glass bubbles during mixing as well as softening and extending the polymer. The use of one or more plasticizers tends to reduce any tendency of the microspheres to increase the modulus and hardness or to reduce the elongation and flexibility of the cured elastomer.

By selecting a thermosetting polymer, the plasticizer may be incorporated without resulting in solution of the polymer and the plasticizer may be chemically bound in the cured compound during vulcanization. Consequently, bleeding of the plasticizer is not normally a problem. The microspheres are maintained as a uniform dispersion after vulcanization.

The preferred method for incorporation of the microspheres is Open Mill.

In Open Mill mixing the polymer is banded on a warm roll mill (70-90ºC) for 5 - 10 minutes. This reduces the viscosity of the polymer. All ingredients (fillers, curatives, accelerators, processing aids, etc.) are added to the polymer and mixed until thoroughly dispersed. The oil/plasticizer is then added to the glass bubbles. The thin film which coats the surface of the glass bubbles lubricates and aids the incorporation of the glass bubbles. Prior to adding the oil/microsphere mixture the mixing shear force is reduced to a minimum. This is achieved by opening the mill nip so that the free roll is just touching the polymer.

When the oil/microsphere mixture is added to the nip the oil softens and swells the polymer and the lubricated glass bubbles are forced into the polymer by the low shear imposed by the open nip. During mixing the mixing shear forces are kept to a minimum so as to reduce any breakage of the microspheres. The spherical bubbles aided by the oil lubrication and soft polymer, mix by their own rotation. Desirabily, the compound is kept on the slow roll during milling.

With increasing addition of the oil/glass bubble mixture the compound viscosity is lowered making incorporation of the glass bubbles progressively easier.

The curatives and accelerators usually incorporated when compounding the selected polymer should be added before the glass bubbles to ensure even dispersion.

When remilling a compound containing glass bubbles it is important to minimise shear forces. That can be achieved by starting with a wide open nip and gradually closing the nip.

Mixing may also be accomplished using mixing machines used for rubber compounding such as a Zeta Mill or Banbury Mixer.

When using a Zeta Mill, the polymer and all ingredients except the oil and glass bubbles are mixed on an open roll mill as described above. 50 - 100 PHR of oil are added while the polymer is still on the mill. This softens the compound considerably. The soft compound is then cut into small pieces and added to the Zeta mixer with the remaining oil and glass bubbles for complete dispersion.

If a Banbury mixer is used the polymer and all ingredients except the oil and glass bubbles may be mixed first with the stock temperature being raised to 60ºC - 80ºC. 50 - 100 PHR of oil are added to the polymer to reduce its viscosity. The remaining oil and glass bubbles are mixed together and then added progressively to the Banbury mixer, stock temperature being controlled to prevent premature vulcanization.

In general the incorporation of the microspheres thus involves, in combination, selecting microspheres of a sufficiently high crush strength, adding a plasticizer/lubricant and controlling the shear forces during mixing so as to maintain the integrity of the microspheres.

After compounding the elastomeric polymer is formed and cured in a conventional manner using time and temperature combinations selected in accordance with the curing system used.

The physical properties of the vulcanized component can be controlled in several ways apart from variation of addition levels in ways known to those skilled in the art of the compounding ingredients.

For example a coupling agent such as silane, may be applied to the surface of the microspheres or directly into the polymer. On vulcanization, chemical bonds are formed between the microsphere and the polymer. This allows those skilled in the art to control physical properties such as tensile strength, percent elongation, modules, tear strength, hardness and compression set resistance.

For wetsuit material, it is preferred not to use a coupling agent since in compounds without the coupling agent, the only bonds between the glass bubble and the polymer are the mechanical bonds formed during vulcanization as a result of intimate surface contact. A process of post stretching after vulcanisation breaks the physical bonds formed during vulcanisation. The extent of post stretching also allows control of the physical properties of the compound. Post stretching reduces tensile strength, tear strength, modulus of elasticity and hardness while increasing the % elongation in a manner desirable for wetsuit material. The stretching procedure results in a soft flexible closed cell foam, with voids filled with incompressible microspheres. The material may be prestretched in one or more directions depending on the properties required.

Various specific examples are given below of formulations according to the invention.

EXAMPLE 1

| | Parts By Weight |
|---|---|
| 1. Norsorex N | 100 |
| 2. Glass Bubbles B38/4000 | 150 |
| 3. Reinforcing filler | 0 |
| 4. Plasticizer | 300 |
| 5. Vocol | 2 |
| 6. Thiurad | 1 |
| 7. Santocure NS | 2 |
| 8. Sulphur | 1 |
| 9. Other Additives, Zinc Oxide | 5 |
| 10. Stearic Acid | 2 |
| TOTAL: | 563 |

Norsorex N is a polynorbornene powder available from CDF Chemie and is a thermosetting polymer. Glass bubbles B38/4000 are available from 3M Company and have a nominal crush strength of 4000 psi (27,576 kPa). Use of a reinforcing filler is optional. Fillers, for example carbon black or fumed silica, may be added to improve physical properties such as tear strength and tensile strength if desired. In the present case reinforcing fillers were omitted. If fillers are used, non-black, non-crystalline reinforcing fillers are preferred when lower thermal conductivity is desired. The plasticizer is preferably mineral oil and serves to lubricate during the addition of the glass bubbles and to keep the end product soft. The oil is added with the glass bubbles as previously described. The amount of plasticizer may vary from about 50 to about 400 parts by weight of the composition.

Components 5 to 8 constitute a curing system marketed by Monsanto Limited but other curing systems would be equally suitable for example photoresponsive, radiation responsive, peroxide, sulphur/sulphur donor curing systems. Zinc oxide and stearic acid are conventional additives.

The components were mixed together as previously described by means of a Roll Mill, Zeta Mill, Banbury Mixer or the like. After mixing the composition was cured for 150ºC and 15 minutes. In general curing conditions are conventional having regard to the particular curing system chosen.

The sheets are stretched after curing to break the restrictive adhesive bonds between the rubber and the microspheres as to render the finished sheets more readily extendable.

The sheets may then be laminated in conventional manner with lycra, brushed nylon or the like stretch fabrics and then fabricated into wetsuits, e.g. by sewing.

EXAMPLE 2

|  | | Parts By Weight |
|---|---|---|
| 1. | Norsorex 150 NA | 100 |
| 2. | Glass Bubbles B38/4000 | 125 |
| 3. | Reinforcing filler | 0 |
| 4. | Plasticizer | 200 |
| 5. | Vocol | 2 |
| 6. | Thiurad | 1 |
| 7. | Santocure NS | 2 |
| 8. | Sulphur | 1 |
| 9. | Others: | |
|  | Zinc Oxide | 5 |
|  | Stearic Acid | 2 |
|  | TOTAL: | 438 |

The ingredients of this formulation are similar to that of Example 1 except in that 100 parts of Norsorex 150 NA are substituted for Norsorex N. Norsorex 150 NA is a polynorbornene polymer in slab form to which 50% naphthenic oil has been added by the supplier, CDF Chemie. The formulation was compounded and further processed as described for Example 1. Norsorex 150 AR may be substituted for Norsorex 150 NA if desired. Items 5 - 7 are curing agents obtainable from Monsanto Limited.

The composition of Example 2 was cured at 170°C for five minutes.

EXAMPLE 3

A formulation was prepared which was in every respect similar to that of Example 2 except in that 100 parts by weight Norsorex 150 NA/25 EP was substituted for Norsorex N. Norsorex 150 NA/25 EP is a polynorbornene in slab form to which oil and EPDM Polymer have been added. The formulation was compounded and further processed as described for Example 1.

EXAMPLE 4

|  | Parts By Weight |
|---|---|
| 1. Keltan 509x100 | 150 |
| 2. Glass Bubbles B38/4000 | 125 |
| 3. Reinforcing filler Nipsil VN3 | 25 |
| 4. Naphthenic Oil (Plasticizer) | 275 |
| 5. N-Cyclohexyl-2 Benzothiazyl Sulphenamide | 3.5 |
| 6. Tetramethylthiuram Disulphide. | 1.5 |
| 7. Sulphur | 2 |
| 8. Zinc Oxide | 5 |
| 9. Stearic Acid | 2 |
| TOTAL: | 589 |

Keltan 509x100 is an EPDM polymer which is designed to absorb high levels of oil and filler and is obtainable from DSM Chemical Pty. Ltd.

N-Cyclohexyl-2-benzothiazyl sulphenamide and tetramethylthiuram disulphide and sulphur constitute a vulcanizing system. Nipsil VN3 is a silica obtainable from Nippon Zeon.

The composition of Example 4 was mixed on a roll mill as previously described and cured at 150°C for 15 minutes.

EXAMPLE 5

|  | PHR |
|---|---|
| Silastic NPC 40 (Dow Corning) | 100 |
| B38/4000 (3M) | 20 |
| VAROX (R.T. Vanderbuilt & Co. | 1.2 |
| TOTAL: | 121.2 |

The compound was vulcanised at 170°C for 10 min.

EXAMPLE 6

|  | PHR |
|---|---|
| Fluorel FC2120 (3M) | 100 |
| BSX Glass Bubbles (3M) | 10 |
| Dibutyl Sebacate (plasticizer) | 10 |
| Magnesium Oxide | 3 |
| Calcium Hydroxide | 6 |
| TOTAL: | 129 |

The compound was vulcanised at 150°C for 20 min.

Physical properties of materials made in accordance with Examples 1, 2 and 4 are shown in Tables 1, 2 and 3 in comparison with a prior art neoprene foam wetsuit material designated Sample A (7 mm thickness) and Sample B (2 mm thickness). Except as specified tests were conducted on 2mm thick samples made according to the example designated without reinforcing fabric.

Thermal conductivity was measured at a temperature gradient of 38°C which is approximately the same as the difference between body temperature of a diver and freezing water. The method used was as follows:-

1. A steel block 150 mm x 100 mm x 70 mm was immersed in water so that the upper surface of the block remains dry.

7

2. The temperature of the steel block was measured and adjusted by raising or lowering the temperature of the water bath. The temperature of the steel block was maintained at 41°C ± 3°C.

3. The sample to be measured was placed directly on top of the metal block.

4. A heat flow sensor was placed onto the centre of the sample and a 500 ml beaker of water and ice is placed on the sensor. A thermometer was placed into the ice and water mixture and the temperature was stabilised before placing the beaker on the thermocouple.

5. 120 seconds after placing the sample, sensor and beaker in position the following measurements were taken:-

| - temperature of the steel block | °C (TH) |
|---|---|
| - temperature of the ice/water | °C (TC) |
| - heat flow (BTU/ft²hr) (W/m²) | (HF) |

6. The corrected heat flow (C.H.F.) was calculated by adjusting the actual heat flow reading to a temperature

gradient of 38°C

i.e. TH = 42°C TC = 2°C HF = 240 BTU/ft²hr (756 W/m²)

C.H.F. = (38 x H.F.)/(TH-TC) = 228 BTU/ft² hr. (718 W/m²) In a diving wetsuit the tensile strength and tear strength influence the wearing characteristics of the suit although the lamination of stretch fabric to both sides of the rubber greatly enhances the compounds performance. In fact, the fabric is a major factor in a diving suit's ability to resist cuts, abrasion and general wear and tear.

Modulus and % Elongation indicate the extent and ease of flexibility of the material which relates to ease of fitment and comfort of the wearer of the diving suit. In general the lower the Modulus and the higher the elongation of the material the greater the ease of fitment and comfort.

Preferred embodiments exhibit a substantially constant volume and thermal conductivity at pressures from 0 to 250 atmospheres (0-25,000 kPa) (see tables 2 and 3), that is to say the parameters will vary by less than 20% over that range of pressure.

An important advantage of materials according to the invention is that complex shapes, for instance a glove shape, may be moulded from the microsphere containing elastomeric material. This generally facilitates construction of an article such as a wetsuit.

As will be apparent to those skilled in the art from the teaching hereof, the compositions may be varied in respect of type and addition level of fillers, plasticizers, curatives, accelerators and the like without departing from the inventive concept hereof.

Although the invention has been described with emphasis upon use in fabrication of wetsuits, the materials herein described are useful in other applications in which elastomers having either a low thermal conductivity, constant volume under pressure, buoyancy, reduction in cost, or combinations of these properties are desired.

For example, a layer of polymer including hollow microspheres by virtue of its thermal insulating qualities could be included in a vehicle tyre to control heat flow and heat build up in use of the tyre.

Similarly, the incorporation of microspheres in polymers according to the invention can be used in cable construction when it is desired that the cable has controlled buoyancy.

Those skilled in the art will readily apply the invention to other uses and products.

T A B L E   1

P H Y S I C A L   P R O P E R T I E S

| | SAMPLE B | | EXAMPLE 1 | EXAMPLE 2 | EXAMPLE 4 |
|---|---|---|---|---|---|
| | RANGE | TYPICAL | | | |
| Tensile Strength (MPA) | 0.5 – 2.5 | 1.2 | 0.26 | 0.2 | 0.6 |
| % Elongation | 200 – 500 | 400 | 535 | 620 | 1000 |
| 100% Modulus (MPA) | 0.1 – 1.5 | 0.3 | * | * | 0.16 |
| 300% Modulus (MPA) | 0.5 – 2.5 | 1.0 | * | * | 0.28 |
| Tear Strength (MPA) | 0.1 – 2.0 | 0.25 | * | * | 0.20 |
| Hardness (Shore A) | 0 – 10 | 3 | 5 | 8 | 7 |
| Thermal Conductivity (BTU/ft$^2$hr) (W/m$^2$) | 200 – 300 (630 – 945) | 250 (788) | 214 (675) | 219 (690) | 300 (946) |
| Specific Gravity (gm/cm$^3$) | 0.2 – 0.3 | 0.2 | 0.75 | 0.64 | 0.70 |

* Not measured

9

TABLE 11

| SAMPLE THICKNESS (MM) AS A FUNCTION OF PRESSURE | | | | | | |
|---|---|---|---|---|---|---|
| PRESSURE (ATM) (Pa) | 1 ($1 \times 10^5$) | 2 ($2 \times 10^5$) | 3 ($3 \times 10^5$) | 4 ($4 \times 10^5$) | 5 ($5 \times 10^5$) | 6 ($6 \times 10^5$) |
| Sample A | 7 | 4.9 | 4.0 | 3.4 | * | 3.1 |
| Sample B | 2.3 | 2.0 | 1.75 | 1.6 | * | 1.6 |
| Example 1 | 2.5 | 2.5 | 2.5 | 2.5 | 2.5 | 2.5 |
| Example 2 | 2.5 | 2.5 | 2.5 | 2.5 | 2.5 | 2.5 |
| Example 4 | 2.5 | 2.5 | 2.5 | 2.5 | 2.5 | 2.5 |

TABLE 111

| THEMAL CONDUCTIVITY AS A FUNCTION OF PRESSURE (BTU/ft$^2$hr) (W/m$^2$) | | | | | | |
|---|---|---|---|---|---|---|
| PRESSURE (ATM) (Pa) | 1 ($1 \times 10^5$) | 2 ($2 \times 10^5$) | 3 ($3 \times 10^5$) | 4 ($4 \times 10^5$) | 5 ($5 \times 10^5$) | 6 ($6 \times 10^5$) |
| Sample A | 145 (457) | 154 (485) | 115 (362) | 160 (504) | - | 188 (593) |
| Sample B | 182 (574) | 214 (675) | 213 (671) | 284 (895) | - | 280 (883) |
| Example 1 | 245 (772) | 186 (586) | 230 (725) | 194 (611) | - | - |
| Example 2 | 218 (687) | 243 (766) | 220 (693) | 193 (608) | - | 219 (690) |

## Claims

1. A method for manufacture of an elastomeric material comprising the steps of:-

   (i) mixing substantially incompressible buoyant smooth, hollow, glass microspheres, a plasticizer and a millable thermosetting elastomeric polymer composition having a Mooney Viscosity ML (1+4) 125°C in excess of 5 units, wherein the plasticizer is combined with the incompressible buoyant microspheres prior to said step of mixing,

   (ii) curing the composition, and

   (iii) stretching the cured composition to reduce the modulus of the cured composition, if any, between the buoyant microspheres and the cured composition.

2. A method according to Claim 1 wherein mixing is effected by means of a high shear mixer and shear forces are controlled during mixing to maintain the integrity of the microspheres.

3. A method according to Claim 1 or Claim 2 wherein mixing is effected by means of a roll mill, a Banbury mixer or a Zeta mixer.

4. A method according to any preceding claim wherein the thermosetting polymer composition comprises a polymer selected from styrene butadiene rubber, polymers of ethylene propylene, polynorbornene, chloroprene, silicone, fluoro polymers and mixtures thereof.

5. A method according to Claim 4 wherein the polymer is EPM or EPDM.

6. A method according to Claim 4 or 5 wherein the polymer has a green strength greater than 42 N/mm$^2$ and an elongation at break of less than 1400%.

7. A method according to any preceding claim wherein curing is effected in an injection or compression mould.

8. A method according to any preceding claim for manufacture of an elastomeric material further comprising the step of laminating the cured composition with a stretch fabric.

**9.** A method according to Claim 8 wherein the step of stretching is performed after the step of curing and prior to the step of laminating.

**10.** A method according to Claim 8 further comprising a step of wetsuit or glove shape manufacture wherein the step of stretching is performed after the step of laminating and prior to the step of wetsuit or glove shape manufacture.

**Patentansprüche**

**1.** Verfahren zur Herstellung von elastomeren Materialien bestehend aus den folgenden Schritten:
(i) Mischen von im wesentlichen nicht komprimierbaren, schwimmfähigen, glatten, hohlen Glasmikrokugeln, einem Weichmacher und einer mahlbaren, thermoduren, elastomeren Polymermischung mit einer Mooney Viskosität ML (1 + 4) 125 ° C von über 5 Einheiten, wobei der Weichmacher mit den nicht komprimierbaren, schwimmfähigen Mikrokugeln vor dem Mischschritt vereinigt wird.
(ii) Härten der Mischung und
(iii) Recken der gehärteten Mischung, um den Zusammenhang zwischen der gehärteten Mischung und den schwimmfähigen Mikrokugeln, falls vorhanden, zu reduzieren.

**2.** Verfahren nach Anspruch 1, wobei das Mischen in einem Mischer hoher Scherkraft erfolgt und die Scherkräfte während des Mischens kontrolliert werden, um die Unversehrtheit der Mikrokugel zu erhalten.

**3.** Verfahren nach Anspruch 1 oder 2, wobei das Mischen mit einer Kugelmühle, einem Banbury-Mischer oder einem Zeta-Mischer erfolgt.

**4.** Verfahren nach einem der vorstehenden Ansprüche, wobei die thermisch gehärtete Polymermischung aus den folgenden Polymeren ausgewählt ist: Ethylen Propylen, Polynorbornen, Chloropren, Silicon, Fluorpolymere und Mischungen davon.

**5.** Verfahren nach Anspruch 4, wobei das Polymer EPM oder EPDM ist.

**6.** Verfahren nach Anspruch 4 oder 5, wobei das Polymer eine Grünfestigkeit von über 42 N/mm$^2$ und eine Verlängerung bis zum Bruch von weniger als 1400 % besitzt.

**7.** Verfahren nach einem der vorstehenden Ansprüche, wobei die Härtung in einer Injektions- oder Kompressions-Form erfolgt.

**8.** Verfahren nach einem der vorstehenden Ansprüche, wobei die Herstellung des elastomeren Materials den weiteren Schritt des Verbindens des gehärteten Materials mit einem streckbaren Stoff umfaßt.

**9.** Verfahren nach Anspruch 8, wobei der Streckschnitt nach dem Härten und vor dem Laminieren erfolgt.

**10.** Verfahren nach Anspruch 8, umfassend den weiteren Schritt einer Taucheranzug- oder Handschuhform-Herstellung, wobei der Streckschritt nach dem Laminieren und vor dem Schritt der Taucheranzug- oder Handschuhform-Herstellung durchgeführt wird.

**Revendications**

**1.** Procédé de préparation d'un matériau élastomère comprenant les étapes consistant à:
- (i) mélanger des microsphères en verre sensiblement incompressibles, creuses, lisses et flottables, un plastifiant et une composition d'un polymère élastomère thermoformable, susceptible d'être laminé, ayant une Viscosité Mooney ML (1 + 4) 125 ° C excédant 5 unités, le plastifiant étant combiné avec les microsphères flottables incompressibles avant l'étape de mélange;
- (ii) vulcaniser la composition;
- (iii) étirer la composition vulcanisée pour réduire le module de la composition vulcanisée, le cas échéant, entre les microsphères flottables et la composition vulcanisée.

**2.** Procédé selon la revendication 1, dans lequel le mélange est effectué au moyen d'un mélangeur à fort cisaillement, et les forces de cisaillement sont réglées pendant le mélange pour maintenir l'intégrité des microsphères.

**3.** Procédé selon la revendication 1 ou 2, dans lequel le mélange est effectué au moyen d'un laminoir à rouleaux, un mélangeur Banbury ou un mélangeur Zeta.

**4.** Procédé selon l'une quelconque des revendications précédentes, dans lequel la composition de polymère thermoformable comprend un polymère choisi parmi le caoutchouc butadiène styrène, les polymères d'éthylène-propylène, le polynorbornène, le chloroprène, le silicone, les fluoropolymères et leurs mélanges.

**5.** Procédé selon la revendication 4, dans lequel le polymère est EPM ou EPDM.

**6.** Procédé selon la revendication 4 ou 5, dans lequel le polymère a une résistance à cru supérieure à 42 N/mm$^2$ et une élongation à la rupture inférieure è 1 400 %.

**7.** Procédé selon l'une quelconque des revendications précédentes, dans lequel la vulcanisation est effectuée dans un moule à injection ou à compression.

**8.** Procédé selon l'une quelconque des revendications précédentes, pour la préparation d'un matériau élastomère comprenant en outre l'étape de laminage de la composition vulcanisée avec un matériau extensible.

**9.** Procédé selon la revendication 8, dans lequel l'étape d'étirage est effectuée après l'étape de vulcanisation et avant l'étape de laminage.

**10.** Procédé selon la revendication 8, comprenant en outre une étape de fabrication de mise en forme de gant ou de combinaison de plongée, dans lequel l'étape d'étirage est effectuée après l'étape de laminage et avant l'étape de fabrication de mise en forme de gant ou de combinaison de plongée.